# EUROPÄISCHE PATENTSCHRIFT

(11) **EP 0 984 177 B1**
(45) Veröffentlichungstag und Bekanntmachung des Hinweises auf die Patenterteilung: **29.10.2003**
(21) Anmeldenummer: 99116555.6
(22) Anmeldetag: 24.08.1999
(51) Int. Cl.: F16B 35/04, F16B 25/00, E04G 23/02, E04B 1/16, E04B 5/23

(54) **Verbundschraube für ein Holz-Beton-Tragwerk**
Connecting screw for wood-concrete composite structure
Vis d'assemblage pour structure combinée bois-béton

(30) Priorität: 02.09.1998 DE 29815614 U
(43) Veröffentlichungstag der Anmeldung: 08.03.2000
(73) Patentinhaber: Wieland Engineering AG, CH-7304 Maienfeld (CH)
(72) Erfinder: Wieland, Heinz, 7304 Maienfeld (CH)
(74) Vertreter: Blumbach, Kramer & Partner GbR

(56) Entgegenhaltungen:
- EP-A- 0 801 233
- DE-A- 3 435 434
- DE-A- 19 705 202
- DE-U- 8 713 106
- US-A- 5 536 127

## Beschreibung

Die Erfindung bezieht sich auf eine Verbundschraube für ein Holz-Beton-Tragwerk, entsprechend dem Oberbegriff des Anspruchs 1.

Es ist bekannt (DE 34 35 434 A1, DE 197 05 202 A1, EP 0 801 233 A1), Holzkonstruktionsteile vor einer Betonwand oder Mauer mittels einer Distanzschraube zu befestigen. Neben dem üblichen Schraubgewinde weist eine solche Distanzschraube Ringzonen mit etwa trapezförmigem Längsquerschnitt auf, die gestaffelt aufeinander folgen und einen sägezahnförmigen Umriss ergeben, dessen flache Flanken zu dem Gewindeabschnitt hin gerichtet sind. Dies Neigung ist beim Eindrehen der Distanzschraube in das vor der Wand oder Mauer zu befestigende Holzkonstruktionsteil nützlich. Eine Einbettung in Beton ist für diese Ringzonen nicht vorgesehen; die Abstützwirkung an den flachen Flanken wäre im übrigen ungünstig.

Bei Knochenschrauben (US-A-5 536 127) ist es bekannt, Gewindeabschnitte unterschiedlicher Steigung und Gangrichtung vorzusehen.

Zur Befestigung von Schalungsbrettern an Balken sind Befestigungsstifte bekannt (DE 87 13 106 U), die einen zylindrischen Schaft und eine Spitze aufweisen, wobei der zylindrische Schaft Vertiefungen oder Erhöhungen aufweist, wobei dreieckförmige, sägezahnförmige, rechteckige, trapezförmige oder halbkreisförmige Längsquerschnitte erwähnt sind, darunter eine solche, bei der die steilen Flanken zur Spitze des Befestigungsstiftes hin angeordnet sind. Zweck der Vertiefungen oder Erhöhungen am Schaft des Befestigungsstiftes ist es, den Nagelkopf zu vermeiden, um das Ausnageln von Schalungsbrettern zu vereinfachen, weil ohne Nagelkopf eine schwächere Verankerung im Schalungsbrett erzielt wird.

Tragwerke aus Holzbalken und einer Ortbetonplatte sind bekannt (EP 0 432 484 B1), bei denen ein Schraubbolzen in den Holzbalken geschraubt ist und ein freier Schaftbereich mit Schraubkopf in der Ortbetonplatte einbetoniert ist. Bei dieser Verbundschraube oberbegrifflicher Art besteht der Betoneinbettungsabschnitt aus dem Schraubenkopf mit angeformtem Bund, einem gewindefreien Schaftabschnitt und einem Flansch gleichen Durchmessers zu dem Bund, jedoch mit Abstand zu diesem. Der Flansch dient als Anschlag bei der Montage der Verbundschraube. In der Schrift wird als denkbar angesehen, den Schaftabschnitt zwischen Bund und Flansch gerillt auszuführen, jedoch wird dies als nicht notwendig erachtet, und außerdem sei die Querschnittsschwächung bei Knickbelastung bedenklich.

Bei der Einbettung einer Verbundschraube kommt es vor, daß der Beton nicht gut unter den Kopf fließt und sich dort ein Lunker bildet. Wenn es sich um Leichtbeton handelt, kann sich auch das Zuschlag-Korn aus Styropor oder Blähton gerade unter dem Kopf ansammeln. In solchen Fällen werden Kräfte, die in Achsrichtung der Schraube verlaufen, nur durch den gewindefreien Bolzenabschnit gehalten bzw. es kommt zu einer Kraftüberschreitung und geringen Verschiebung, was die Kräfteverteilung in dem Tragwerk nachteilig beeinflußt.

Der Erfindung liegt die Aufgabe zugrunde, eine Verbundschraube der eingangs angegebenen Art zu schaffen, mit der eine sichere Verankerung im Beton möglich ist.

Die gestellte Aufgabe wird aufgrund der Merkmale des Anspruches 1 gelöst und durch die weiteren Merkmale der Unteransprüche ausgestaltet und weiterentwickelt.

Im einzelnen ist der Betoneinbettungsabschnitt zur Bildung eines Verankerungsabschnittes mit Abstütz-Zonen entlang eines beträchtlichen Teiles seiner Länge versehen. Die Abstütz-Zonen bestehen aus Querflächen, die sich senkrecht oder ziemlich steil zu der Schraubenachse bzw. Bolzenschaftachse erstrecken. Der Verankerungsabschnitt kann aus Ringzonen mit etwa trapezförmigem Querschnitt aufgebaut sein, wobei die Ringzonen gestaffelt aufeinander folgen und einen sägezahnförmigen Umriß ergeben. Die Differenz der Länge der beiden zueinander parallelen Seiten des Trapezes bildet jeweils eine ringförmige Abstütz-Zone, die quer zur Bolzenschaftachse verläuft und damit den Beton um das gleiche Maß zusammenzupressen versucht, wie es der elastischen Dehnung des Schraubbolzens bei Belastung in Achsrichtung entspricht. Da es viele Ringzonen gibt, ist die Chance, mit einem gesunden Betonabschnitt zu kooperieren, äußerst groß, d.h. die Gefahr, daß sich die Verbundschraube bei Belastung lockert, äußerst gering.

Es ist auch möglich, die Abstütz-Zonen durch Sägezahngewinde zu erzeugen, wobei die steilen Flanken des Sägezahngewindes zu dem Holzeingriff-Gewindeabschnitt hin angeordnet sind. Bei dieser Ausführungsform wird eine Ganghöhe oder Gangrichtung bevorzugt, die von der Ganghöhe oder Gangrichtung des Holzeingriffgewindes abweicht, um am Übergang des Holzeingriff-Gewindeabschnittes zu dem Betoneinbettungsabschnitt einen Anschlag zu bilden, der das Eindrehen der Verbundschraube in Holz über den Holzeingriff-Gewindeabschnitt hinaus erschwert.

Weitere Einzelheiten der Erfindung ergeben sich aus der nachfolgenden Beschreibung im Zusammenhang mit der Zeichnung.

Dabei zeigt :
- Fig. 1: eine Verbundschraube, von der Seite gesehen,
- Fig. 2: einen vergrößerten Abschnitt aus Fig. 1,
- Fig. 3: eine Einzelheit in vergrößerter Darstellung einer abgewandelten Ausführungsform.

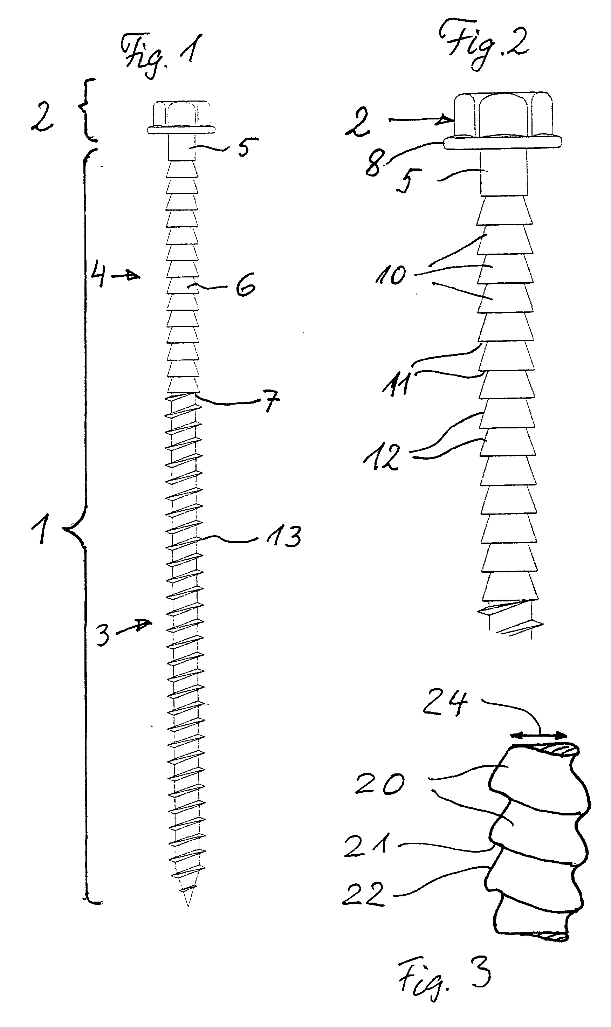

Fig. 1 zeigt eine erste Ausführungsform der Verbundschraube insgesamt. Man kann einen Bolzenschaft 1 und einen angeformten Kopf 2 unterscheiden. Hinsichtlich des Einbaus kann man einen Holzeingriff-Gewindeabschnitt 3 und einen Betoneinbettungsabschnitt 4 unterscheiden. Der Betoneinbettungsabschnitt 4 untergliedert sich in den bereits erwähnten Kopf 2, einen freien Schaftabschnitt 5 und einen Verankerungsabschnitt 6. Zwischen dem Verankerungsabschnitt 6 und dem Holzeingriff-Gewindeabschnitt 3 ist ein Anschlag 7 gebildet, der das Eindrehen der Verbundschraube in Holz über den Holzeingriff-Gewindeabschnitt 3 hinaus verhindern oder jedenfalls erschweren soll.

Der Verankerungsabschnitt 6 enthält eine Anzahl Ringzonen 10, und zwar können bei einer Bolzenschaftlänge von 150mm zehn bis dreißig Ringzonen 10 vorgesehen sein. Die Ringzonen 10 weisen einen etwa trapezförmigen Längsquerschnitt auf, wobei die längeren Seiten der zu aneinander parallelen Trapezseiten in Richtung auf den Holzeingriff-Gewindeabschnitt 3 gerichtet sind. Auf diese Weise werden ringförmige Abstütz-Zonen 11 gebildet, mit denen sich die Verbundschraube bei achsialer Belastung im Beton abstützen kann.

Wie ersichtlich, bestehen die Abstütz-Zonen 11 aus Querflächen, die sich im wesentlichen senkrecht zu der Bolzenschaftachse erstrecken. Die Abstütz-Zonen 11 sind gestaffelt zueinander angeordnet und über Kegelstumpfflächen 12 miteinander verbunden. Von der Seite gesehen ergibt sich ein sägezahnförmiger Umriß mit flachen Flanken 12 und steilen Flanken 11.

Der Holzeingriff-Gewindeabschnitt 3 weist Holzgewinde 13 auf, wie es zum Einschneiden in nicht vorgebohrte Löcher benutzt wird. Derartiges Gewinde wird spanlos erzeugt. Die Ringzonen 10 werden in gleicher Weise spanlos, d.h. durch Rollen oder Walzen erzeugt. Auch der Kopf 2 mit angeformter Scheibe 8 wird spanlos, d.h. durch Fließpressen, erzeugt.

Fig. 3 zeigt eine Einzelheit aus einer abgewandelten Verbundschraube, und zwar ein Stück des Verankerungsabschnittes 6 der Verbundschraube. Anstelle der Ringzonen gibt es Gewindegänge 20, welche steile Flanken 21 und flache Flanken 22 aufweisen. Von der Seite gesehen, ergibt sich wiederum ein sägezahnförmiger Umriß. Die Übergangsbereiche der Flanken sind abgerundet, um Kerbwirkungen zu vermeiden und die Herstellung zu erleichtern. Der Kern des Sägezahngewindes ist bei 24 angedeutet. Das dargestellte Gewinde ist ein Linksgewinde, so daß keine Tendenz besteht, es über den Anschlag 7 hinaus in das Holz hinein zu drehen.

Die Verbundschraube nach Fig. 3 wird ebenso wie die Verbundschraube nch Fig. 1 spanlos hergestellt. Wenn es aus Herstellungsgründen zweckmäßig ist, das Sägezahngewinde 20 als Rechtsgewinde herzustellen, wird die Ganghöhe von dem Gewinde 13 des Holzeingriff-Gewindeabschnittes unterschiedlich gewählt. Auf diese Weise wird verhindert, daß sich das vordere Ende des Verankerungsabschnittes allzu tief in das Holz des Holzbeton-Tragwerkes einschraubt.

Die erfindungsgemäße Verbundschraube wird in Holz-Beton-Verbundsystemen gemäß einem Versetzplan verwendet. Ein solcher Versetzplan sieht beispielsweise vor, Verbundschrauben paarweise im Winkel von 45° durch Bodenbretter hindurch in Holzbalken einzutreiben, wobei der Betoneinbettungsabschnitt 4 oberhalb der Bretterschicht bleibt. Anschließend wird die Betonschicht gegossen und der Beton umfließt die Ringzonen bzw. das Sägezahngewinde, wobei man durch Rütteln das Austreiben von Luftblasen begünstigt. Nach Aushärtung des Betones und Belastung ergibt sich eine gute Verteilung der in den Bolzenschaft einzuleitenden Kräfte, so daß lokale Überlastungen weniger zu befürchten sind. Auch werden lokale Schwachstellen im Beton da oder dort überbrückt und wirken sich nicht schädlich auf den Gesamtverbund aus. Damit wird ein sehr zuverlässiges Holz-Beton-Verbundsystem geschaffen, das sehr preiswert erstellt werden kann.

## Patentansprüche

1. Verbundschraube für ein Holz-Beton-Tragwerk umfassend:
einen Bolzenschaft (1), der eine Bolzenschaftachse definiert, entlang der sich ein angeformter Kopf (2), ein Verankerungsabschnitt (6) und ein Holzeingriff-Gewindeabschnitt (3) erstrecken, wobei der Kopf (2) und
der Verankerungsabschnitt (6) als Betoneinbettungsabschnitt (4) zur Einbettung vorgesehen sind und der Bolzenschaftdurchmesser längs des Verankerungsabschnitts (6) sich periodisch ändert, um axial aufeinander folgende Ringzonen oder Gewindegänge zu bilden,
**dadurch gekennzeichnet,**
**daß** die Ringzonen oder Gewindegänge des Verankerungsabschnittes (6) entlang eines beträchtlichen Teiles der Länge des Betoneinbettungsabschnitts (4) vorgesehen sind und Abstütz-Zonen (11, 21) aufweisen, die aus Querflächen bestehen, welche sich senkrecht oder ziemlich steil zu der Bolzenschaftachse erstrecken, zu dem Holzeingriff-Gewindeabschnitt (3) hin gerichtet sind und über zur Bolzenschaftachse hin wenig steile Umfangsflächen (12, 22) miteinander verbunden sind.

2. Verbundschraube nach Anspruch 1,
**dadurch gekennzeichnet, daß** der Verankerungsabschnitt (6) aus Ringzonen (10) mit etwa trapezförmigem Längsquerschnitt aufgebaut ist, die gestaffelt aufeinander folgen und einen sägezahnförmigen Umriß ergeben, dessen zur Bolzenschaftachse hin steile Flanken (11) zu dem Holzgewindeabschnitt (3) hin gerichtet sind.

3. Verbundschraube nach Anspruch 1,
**dadurch gekennzeichnet, daß** der Verankerungsabschnitt aus einem Kern (24) und Sägezahngewinde (20) aufgebaut ist, welches zur Bolzenschaftachse hin steile Flanken (21) zur Bildung der Abstütz-Zonen und flache Flanken (22) zur Verbindung der Abstütz-Zonen miteinander aufweist, wobei die steilen Flanken der sägezahnförmigen Umrisse zu dem Holzeingriff-Gewindeabschnitt (3) hin orientiert sind.

4. Verbundschraube nach einem der Ansprüche 1 bis 3,
**dadurch gekennzeichnet, daß** der Übergang zwischen Betoneinbettungsabschnitt (4) und Holzeingriff-Gewindeabschnitt (3) als Anschlag (7) ausgebildet ist.

5. Verbundschraube nach einem der Ansprüche 2 bis 4,
**dadurch gekennzeichnet, daß** die Flanken (21, 22) des sägezahnförmigen Umrisses mit Übergangsabrundungen ineinander übergehen.

6. Verbundschraube nach einem der Ansprüche 1 bis 5,
**dadurch gekennzeichnet, daß** der Holzeingriff-Gewindeabschnitt (3) etwa 2/3 und der Betoneinbettungsabschnitt (4) etwa 1/3 der Gesamtlänge der Verbundschraube ausmacht.

7. Verbundschraube nach Anspruch 3,
**dadurch gekennzeichnet, daß** die Ganghöhe des Sägezahngewindes (20) von der Ganghöhe des Holzeingriff-Gewindeabschnitts (3) abweicht.

8. Verbundschraube nach Anspruch 3,
**dadurch gekennzeichnet, daß** die Gangrichtung des Sägezahngewindes (20) von der Gangrichtung des Holzeingriff-Gewindeabschnitts (3) abweicht.

## Claims

1. Connecting screw for wood-concrete composite structure comprising:
a bolt shank (1) defining a bolt shank axis, which a head (2) formed thereon, an anchoring section (6) and a wood-engaging thread section (3) extend along, said head (2) and said anchoring section (6) being provided as within concrete embedded sections (4) and the diameter of said bolt shank is periodically changing along the anchoring section (6) so as to form ring zones arranged one after the other in axial direction, or thread turns,
**characterized in that**
the ring zones or thread turns of the anchoring section (6) are provided along a substantial portion of the length of said concrete embedded section (4) and comprise support zones (11, 21) consisting of cross-areas which extend transversely or rather steep relatively to the bolt shank axis, are facing the wood-engaging thread section (3) and are connected with one another through peripheral surfaces (12, 22) which are less steep relatively to the bolt shank axis.

2. Connecting screw according to claim 1,
wherein the anchoring section (6) is made up of annular zones (10) having a trapezoid cross-section in longitudinal direction, the annular zones being staggered and make a saw tooth-like outline, the flanks (11) thereof which are steep relatively to the bolt shank axis facing the wood engaging thread section (3).

3. Connecting screw according to claim 1,
wherein the anchoring section is made up of a core (24) and a saw tooth thread (20) having flanks (21) which are steep to the bolt shank axis for forming supporting zones, and flanks (22) which are flat for connecting the supporting zones with one another, the steep flanks of the saw tooth shaped outlines being oriented towards the wood-engaging thread section (3).

4. Connecting screw according to one of the claims 1 through 3, wherein the transition between concrete embedding section (4) and wood-engaging thread section (3) is formed as a stop (7).

5. Connecting screw according to one of the claims 2 through 4 ,wherein the flanks (21, 22) of the saw tooth-like outline merge into one another with transition roundings.

6. Connecting screw according to one of the claims 1 through 5, wherein the wood-engaging thread section (3) occupies approximately 2/3 of the total length of the connecting screw and the concrete embedding section (4) approximately 1/3 of the total length.

7. Connecting screw according to claim 3,
wherein the lead or pitch of the saw tooth thread (20) is different from the lead or pitch of the wood-engaging thread section (3).

8. Connecting screw according to claim 3,
wherein the direction of spiral of the saw tooth thread (20) is different to the direction of spiral of the wood-engaging thread section (3).

## Revendications

1. Vis d'assemblage pour une structure porteuse combinée bois-béton comprenant : une tige de boulon (1) définissant un axe de tige de boulon le long duquel s'étendent une tête rapportée (2), un segment d'ancrage (6) et un segment fileté d'introduction dans le bois (3), la tête (2) et le segment d'ancrage (6) étant prévus comme segment d'encastrement dans le béton (4) pour l'encastrement, et le diamètre de tige de boulon le long du segment d'ancrage (6) changeant périodiquement pour former des zones annulaires ou des pas de filetage se succédant axialement,
**caractérisée en ce que** les zones annulaires ou les pas de filetage du segment d'ancrage (6) sont prévus le long d'une importante partie de la longueur du segment d'encastrement dans le béton (4) et présentent des zones d'appui (11, 21) constituées de surfaces transversales qui s'étendent perpendiculairement ou de manière assez raide par rapport à l'axe de tige de boulon, qui sont orientées vers le segment fileté d'introduction dans le bois (3) et qui sont reliées les unes aux autres par des surfaces périphériques (12, 22) peu raides en direction de l'axe de tige de boulon.

2. Vis d'assemblage selon la revendication 1,
**caractérisée en ce que** le segment d'ancrage (6) est formé par des zones annulaires (10) d'une section transversale longitudinale de forme trapézoïdale, s'échelonnant successivement et constituant un contour en forme de dents de scie dont les flancs (11) raides en direction de l'axe de tige de boulon sont orientés vers le segment fileté d'introduction dans le bois (3).

3. Vis d'assemblage selon la revendication 1,
**caractérisée en ce que** le segment d'ancrage est formé d'une âme (24) et d'un filetage en forme de dents de scie (20), qui présente des flancs raides (21) en direction de l'axe de tige de boulon pour former les zones d'appui et des flancs plans (22) pour relier les zones d'appui les unes aux autres, les flancs raides des contours en forme de dents de scie étant orientés vers le segment fileté d'introduction dans le bois (3).

4. Vis d'assemblage selon l'une des revendications 1 à 3, **caractérisée en ce que** le passage entre le segment d'encastrement dans le béton (4) et le segment fileté d'introduction dans le bois (3) présente la forme d'une butée (7).

5. Vis d'assemblage selon l'une des revendications 2 à 4, **caractérisée en ce que** les flancs (21, 22) du contour en forme de dents de scie passent les uns dans les autres avec des arrondis de passage.

6. Vis d'assemblage selon l'une des revendications 1 à 5, **caractérisée en ce que** le segment fileté d'introduction dans le bois (3) représente 2/3 environ et le segment d'encastrement dans le béton (4) 1/3 environ de la longueur totale de la vis d'assemblage.

7. Vis d'assemblage selon la revendication 3, **caractérisée en ce que** la hauteur du pas du filetage en forme de dents de scie (20) est différente de la hauteur du pas du segment fileté d'introduction dans le bois (3).

8. Vis d'assemblage selon la revendication 3, **caractérisée en ce que** le sens du pas du filetage en forme de dents de scie (20) est différent du sens du pas du segment fileté d'introduction dans le bois (3).
